# FASCICULE DE BREVET EUROPEEN

(11) **EP 4 322 614 B1**
(45) Date de publication et mention de la délivrance du brevet: **30.04.2025**
(21) Numéro de dépôt: 23189949.3
(22) Date de dépôt: 07.08.2023
(51) Int. Cl.: H04W 36/00, H04W 84/06, H04W 36/08, H04W 8/22

(54) **PROCÉDÉ DE CHANGEMENT DE CONNEXIONS ENTRE DES STATIONS D'UN GROUPE DE STATIONS D'UN PREMIER A UN SECOND SATELLITE, ET GROUPE DE STATIONS ASSOCIÉ**
VERFAHREN ZUM WECHSELN VON VERBINDUNGEN ZWISCHEN STATIONEN EINER GRUPPE VON STATIONEN VON EINEM ERSTEN ZU EINEM ZWEITEN SATELLITEN UND ZUGEHÖRIGE GRUPPE VON STATIONEN
METHOD FOR CHANGING CONNECTIONS BETWEEN STATIONS OF A GROUP OF STATIONS FROM A FIRST TO A SECOND SATELLITE, AND ASSOCIATED GROUP OF STATIONS

(30) Priorité: 08.08.2022 FR 2208161
(43) Date de publication de la demande: 14.02.2024
(73) Titulaire: THALES, 92400 Courbevoie (FR)
(72) Inventeur: SOULIE, Antoine, 92622 GENNEVILLIERS CEDEX (FR); GOURLAOUEN, Katy, 92622 GENNEVILLIERS CEDEX (FR); MOLIERE, Renaud, 92622 GENNEVILLIERS CEDEX (FR)
(74) Mandataire: Lavoix

(56) Documents cités:
- WO-A1-01/05063
- CN-A- 112 822 738
- US-A1- 2018 359 670
- US-A1- 2021 368 407
- US-B1- 10 506 483

## Description

La présente invention concerne un procédé de changement de connexions entre des stations d'un groupe stations.

L'invention concerne en outre un groupe de stations comprenant plusieurs stations.

L'invention se situe dans le domaine des communications par satellite, en particulier des communications de plusieurs stations formant un groupe par l'intermédiaire de satellites mobiles par rapport à une zone géographique.

Les satellites mobiles sont des satellites défilants en orbite non-géostationnaire, par exemple dans l'orbite terrestre moyenne (MEO en anglais pour « Medium Earth Orbit ») ou dans l'orbite terrestre basse (LEO en anglais pour « Low Earth Orbit »). Les satellites mobiles sont, pendant une durée prédéfinie et à un horaire prédéfini, utilisables en tant que relais de communications pour des communications entre des stations situées dans une zone géographique donnée. Cette durée et cet horaire sont prédéfinis par les éphémérides.

Avant la disparition du satellite mobile à l'horizon, c'est-à-dire avant que ce satellite devienne inaccessible pour la communication entre les stations du groupe par l'intermédiaire de ce satellite, il convient de basculer la communication des stations à un autre satellite mobile afin d'assurer une continuité de service. CN 112 822 738 A et US 2021/368407 A1 décrivent un procédé de changement de connexions de stations d'un satellite à un autre. Le document CN 112 822 738 A décrit en particulier un procédé de gestion de transfert pour un système de communication par satellite en orbite basse dans un scénario d'utilisateurs dense, ledit procédé comprend les étapes suivantes: S1: prédiction d'attribut de regroupement; un terminal utilisateur mesure en continu la force du signal pilote transmis par le satellite, et lorsque l'opération de regroupement est déclenchée, le terminal utilisateur effectue une prédiction d'attribut de regroupement; S2: Sélection des membres; le premier satellite sélectionne un groupe d'utilisateurs au bord du transfert au moment du déclenchement du transfert, c'est-à-dire des membres du même groupe en fonction des attributs de regroupement; S3: Préparation à la passation de pouvoir du groupe. Le premier satellite et le satellite cible effectuent un contrôle d'admission, une réservation de ressources sans fil et une attribution de canal par l'intermédiaire de messages "Group Handover Init" et "Group Handover Back"; S4: exécution du transfert, le premier satellite envoie une commande de transfert au terminal utilisateur pour exécuter le transfert

Dans le contexte des communications au sein d'un groupe de stations, il est particulièrement important de coordonner le basculement d'un satellite à un autre pour toutes les stations du groupe, puisque l'absence de basculement d'une ou plusieurs stations du groupe rompt l'unité du groupe de communication. Cela est susceptible d'entraîner la perte de communication, temporaire ou définitive entre les stations du groupe. Aussi, la présente invention vise à éviter cet inconvénient en permettant une continuité des communications entre les membres du groupe, y compris lorsqu'ils sont présents sous une constellation de satellites impliquant un changement périodique de satellite jouant le rôle de relais.

Pour coordonner le basculement du groupe de stations, généralement un orchestrateur dédié à ce basculement est prédéfini, également appelé « hub » en anglais. L'orchestrateur prédéfini est typiquement situé à une position fixe au sol et envoie des commandes de basculement.

Toutefois, dans certains cas, il est compliqué, voire impossible, de positionner l'orchestrateur prédéfini dans la zone géographique, par exemple compte tenu des contraintes géographiques, par exemple dans les zones maritimes éloignées des côtes.

De plus, lors d'une indisponibilité ou d'une panne de l'orchestrateur prédéfini, le basculement, n'est pas mis en œuvre. Par conséquent, la communication entre les stations du groupe est susceptible d'être interrompue lorsque le satellite défilant disparaît à l'horizon et devient ainsi inaccessible pour la communication.

Enfin, par exemple, lors de l'ajout de stations au groupe, il est nécessaire de reconfigurer l'orchestrateur prédéfini pour commander également le basculement de cette station, rendant cette solution ainsi compliquée et peu flexible.

Un but de l'invention est ainsi au moins de réduire les inconvénients précités.

En particulier, l'invention a pour objectif d'obtenir un procédé de changement de connexions d'un groupe comprenant plusieurs stations qui est plus fiable et/ou plus flexible.

A cet effet, l'invention concerne un procédé de changement de connexions entre des stations d'un groupe de stations, entre un premier état, dans lequel chaque station du groupe de stations est connectée à un premier satellite d'une pluralité de satellites, et un second état, dans lequel chaque station du groupe de stations est connectée à un second satellite de la pluralité de satellites, distinct du premier satellite, lors de l'initialisation du procédé de changement, les stations étant dans le premier état, chaque satellite étant mobile par rapport à une zone géographique dans laquelle les stations dudit groupe de stations sont positionnées, chaque station étant apte à établir une connexion avec chaque satellite pendant une durée de présence prédéterminée dudit satellite, considérée pour ladite zone géographique, le procédé de changement comprenant :
- une phase d'élection d'au moins une station parmi les stations du groupe de stations, en fonction au moins d'une caractéristique relative à une antenne satellitaire de ladite station, pour obtenir au moins une station élue, la ou chaque station élue étant une station qui commande un basculement entre le premier état et le second état ;
- une phase de basculement, comprenant une étape de diffusion, par la ou chaque station élue aux autres stations du groupe de stations, d'une instruction de basculement de la connexion du premier satellite au second satellite.

En effet, le procédé de changement permet d'obtenir un basculement du groupe de stations entre un premier et un second satellite qui est plus flexible et/ou fiable.

Grâce à l'élection de la ou les station(s) configurée(s) pour commander le basculement selon l'invention, la ou les caractéristiques de l'antenne est/sont prise(s) en compte, telles qu'une capacité de basculement. Par conséquent, la ou les station(s) sont élues en fonction de leur capacité de former un orchestrateur pour le changement des connexions entre les premier et second satellites.

Cela permet ainsi d'obtenir un basculement fiable. En effet, une ou plusieurs des stations peuvent jouer le rôle d'un orchestrateur pour le basculement selon l'invention.

Même lors de la perte ou indisponibilité d'une des stations du groupe, le basculement est mis en œuvre, par une autre station élue à cet effet.

En particulier, le procédé de changement permet d'obtenir un basculement en l'absence d'un orchestrateur prédéfini. Ainsi, la fonction de basculement est mise en œuvre par la ou les station(s) élue(s) du groupe même.

Suivant d'autres aspects avantageux de l'invention, le procédé de changement comprend une ou plusieurs des caractéristiques suivantes, prise(s) isolément ou suivant toutes les combinaisons techniquement possibles :
- la caractéristique relative à l'antenne satellitaire de la station comprend une durée de commutation entre la connexion au premier satellite et la connexion au second satellite de ladite station et/ou comprend une capacité d'établissement de connexions simultanément avec le premier satellite et le second satellite par ladite station ;
- la phase d'élection comprend l'élection de la ou chaque station élue en outre en fonction d'une capacité de calcul de ladite station, de préférence la capacité de calcul comprenant une capacité d'estimer un temps de transit d'un signal transmis via le second satellite et/ou une capacité d'estimer l'effet Doppler du signal transmis via le second satellite ;
- la phase d'élection comprend :
   - une première étape de détermination, par chaque station, d'un marquage attribué à cette station, parmi une pluralité de marquages prédéterminés, en fonction de la caractéristique relative à l'antenne satellitaire de ladite station ;
   - une seconde étape de détermination, lors de laquelle chaque station détermine, au moins en fonction du marquage à cette station, une éligibilité de former une station élue de la ou des station(s) élue(s) ;
- chaque station détermine le marquage attribué à cette station parmi :
   - un premier marquage, dit marquage préférentiel, lorsque l'antenne satellitaire de ladite station est configurée pour établir simultanément une connexion avec le premier satellite et le second satellite ;
   - un second marquage, dit marquage secondaire, lorsque l'antenne satellitaire de ladite station est configurée pour établir une connexion, à un instant donné, uniquement avec l'un parmi le premier satellite et le second satellite, et lorsque l'antenne satellitaire présente en outre une durée de commutation de la connexion entre le premier satellite et le second satellite inférieure ou égale à un seuil prédéterminé ;
   - un troisième marquage, dit marquage inapte, lorsque l'antenne satellitaire de ladite station est configurée pour établir une connexion, à un instant donné, uniquement avec l'un parmi le premier satellite et le second satellite, et lorsque l'antenne satellitaire présente en outre une durée de commutation de la connexion entre le premier satellite et le second satellite strictement supérieure au seuil prédéterminé ;
- la phase d'élection comprend en outre une étape de réception, par l'une des stations du groupe de stations, dite station considérée, d'un message comprenant le marquage de l'une des stations du groupe de stations autre que la station considérée, dite autre station, et dans lequel, lors de la seconde étape de détermination, la station considérée détermine son éligibilité de former une station élue de la ou des station(s) élue(s) en outre en fonction dudit message ;
- lors de la seconde étape de détermination, la station considérée détermine son éligibilité selon au moins un des critères suivants :
   - si le marquage de la station considérée est le marquage secondaire et le message comprend le marquage préférentiel de l'autre station, la station considérée détermine qu'elle n'est pas éligible de former une station élue de la ou des station(s) élue(s),
   - si le marquage de la station considérée est le marquage secondaire et le message comprend le marquage secondaire de l'autre station, la station considérée détermine qu'elle est éligible de former une station élue de la ou des station(s) élue(s) uniquement si la durée de commutation fait partie des N stations présentant la durée de commutation la plus courte parmi les durées de commutation de toutes les stations du groupe de stations, N étant un nombre entier prédéterminé,
   - si le marquage de la station considérée est le marquage préférentiel, la station considérée détermine qu'elle est éligible de former une station élue de la ou des station(s) élue(s), de préférence indépendamment du message ;
- la phase de basculement comprend une étape de planification d'une heure de basculement entre la connexion au premier satellite à la connexion au second satellite pour chaque station, en fonction des éphémérides au moins du premier et le second satellite, et dans lequel l'instruction de basculement comprend l'heure de basculement ;
- la phase de basculement comprend une étape de vérification d'une présence du second satellite, lors de laquelle la ou chaque station élue émet un signal balise vers le second satellite, et reçoit une réponse au signal balise du second satellite lors de la présence dudit second satellite, de préférence, l'étape de diffusion étant uniquement mise en œuvre lors d'une réception de ladite réponse ;
- lors de l'étape de diffusion, la ou chaque station élue diffuse l'instruction de basculement via le premier satellite aux autres stations du groupe de stations.

La présente invention a également pour objet un groupe de stations comprenant plusieurs stations configuré pour changer des connexions entre les stations, entre un premier état, dans lequel chaque station du groupe de stations est connectée à un premier satellite d'une pluralité de satellites, et un second état, dans lequel chaque station du groupe de stations est connectée à un second satellite de la pluralité de satellites, distinct du premier satellite, chaque satellite étant mobile par rapport à une zone géographique dans laquelle les stations dudit groupe de stations sont positionnées, chaque station étant apte à établir une connexion avec chaque satellite pendant une durée de présence prédéterminée dudit satellite, considérée pour ladite zone géographique, le groupe de stations étant configuré pour élire au moins une station parmi les stations du groupe de stations, en fonction au moins d'une caractéristique relative à une antenne satellitaire de ladite station, pour obtenir au moins une station élue, la ou chaque station élue étant configurée pour commander un basculement entre le premier état et le second état, la ou chaque station élue étant configuré pour diffuser, aux autres stations du groupe de stations, une instruction de basculement de la connexion du premier satellite au second satellite.

Ces caractéristiques et avantages de l'invention apparaitront à la lecture de la description qui va suivre, donnée uniquement à titre d'exemple non limitatif, et faite en référence aux dessins annexés, sur lesquels :

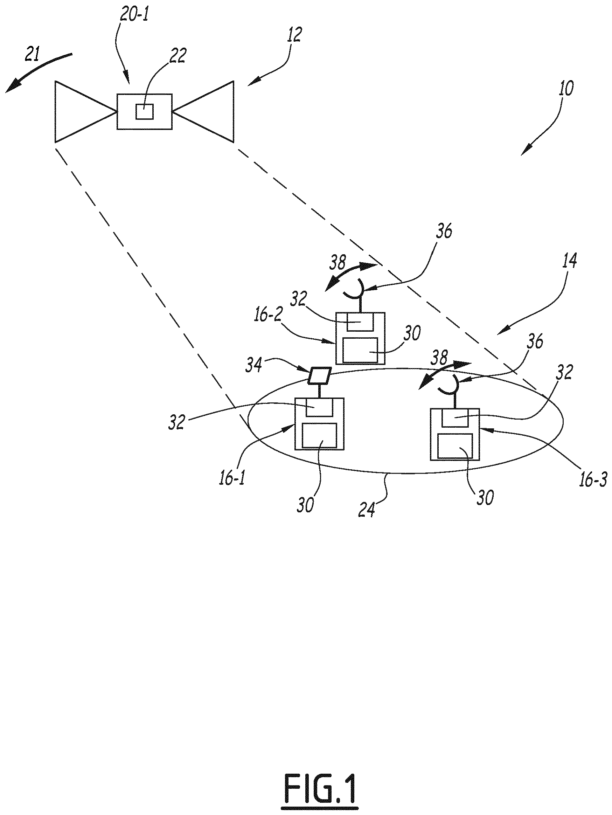

- la figure 1 est une vue schématique d'un système communication comprenant un groupe de stations selon l'invention et une constellation de satellites, dont uniquement un premier satellite de la constellation, accessible pour une communication avec les stations, est représenté, le système de communication étant dans un premier état, dans lequel chaque station est connectée au premier satellite ;

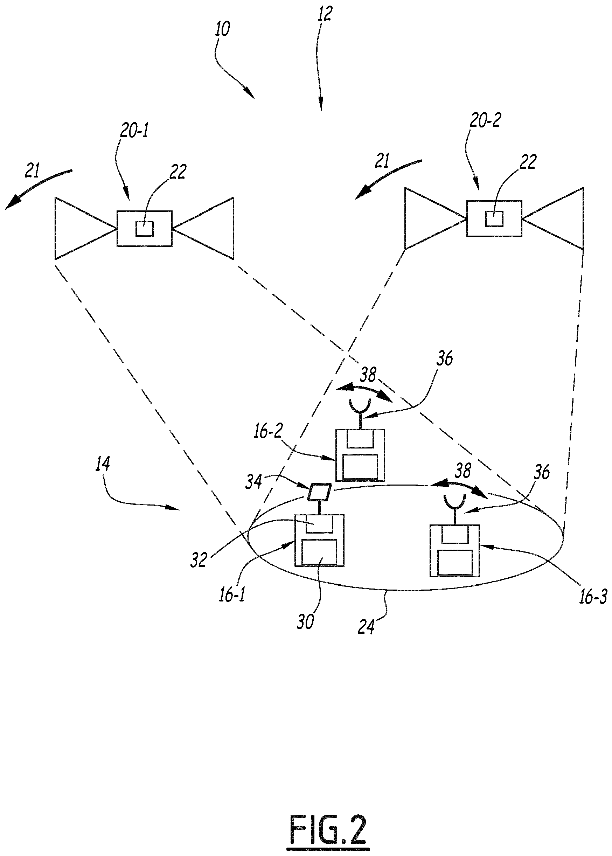

- la figure 2 est une vue schématique du système de communication de la figure 1, dans lequel le premier satellite et un second satellite de la constellation, accessibles pour la communication, sont représentés, le système de communication étant dans un état intermédiaire de basculement ;

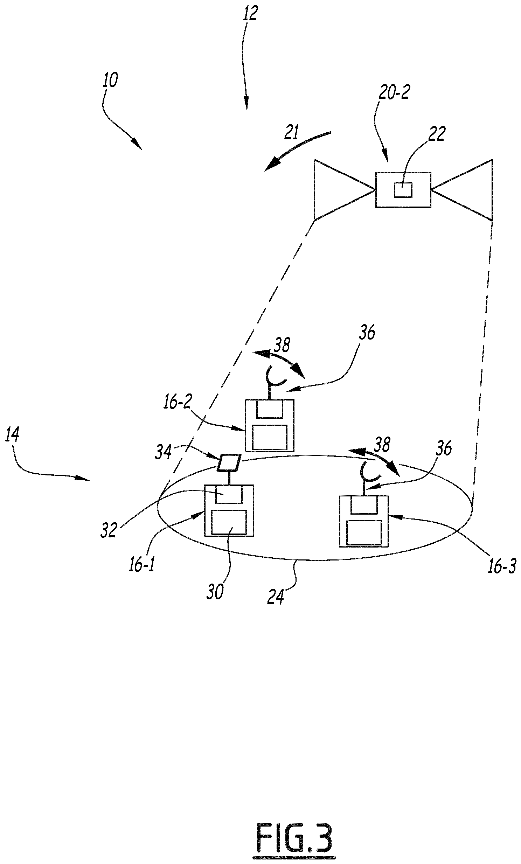

- la figure 3 est une vue schématique du système de communication des figures 1 et 2, dans lequel uniquement le second satellite de la constellation, accessible pour la communication, est représenté, le système de communication étant dans un second état, dans lequel chaque station est connectée au second satellite, et le premier satellite est en particulier inaccessible ; et

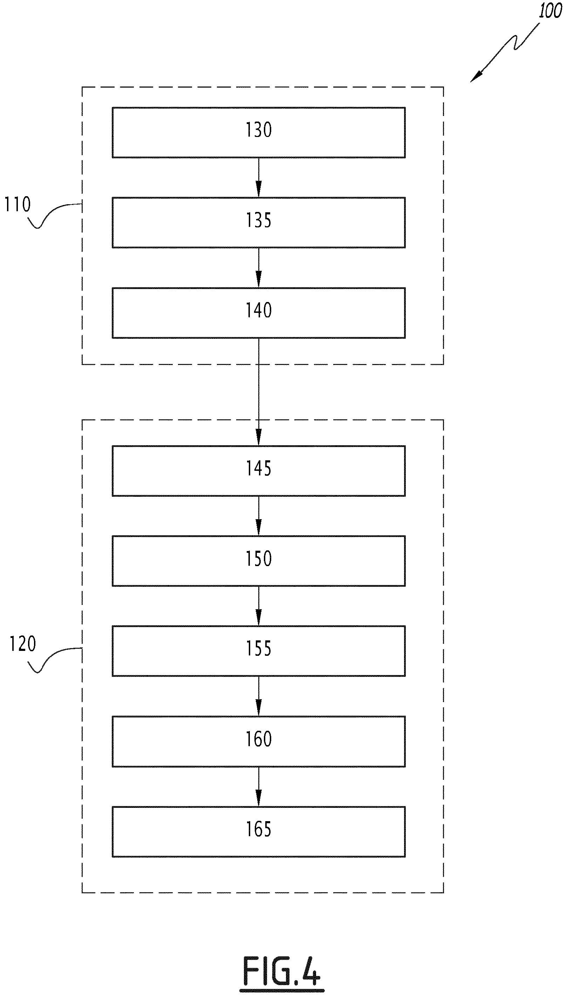

- la figure 4 est un organigramme d'un procédé de changement selon l'invention, mis en œuvre par le groupe de stations du système de communication des figures 1 à 3.

En référence aux figures 1 à 3, un système de communication 10 comprend une constellation 12 de satellites et un groupe de stations 14 comprenant plusieurs stations 16-1, 16-2, 16-3 configurées pour communiquer entre elles en utilisant la constellation 12 de satellites.

La constellation 12 comprend N satellites 20-1 à 20-N mobiles par rapport à une zone géographique dans laquelle les stations 16-1, 16-2, 16-3 du groupe de stations 14 sont positionnées. Le nombre N est supérieur à 2, avantageusement supérieur à 10 et de préférence supérieur à 50. De manière générale, le nombre N peut être compris entre 2 et 1000. Dans certains modes de réalisation, le nombre N est entre 2 et 10 000. Encore dans certains autres modes de réalisation, le nombre N est supérieur à 10 000.

Par « satellite mobile », il est en particulier entendu un satellite défilant sur une orbite non-géostationnaire, telle que l'orbite terrestre basse ou l'orbite terrestre moyenne. Sur les figures 1 à 3, des exemples de déplacement des satellites sont illustrés par des flèches 21.

Dans les exemples des figures 1 à 3, seuls les satellites 20-1 à 20-N accessibles pour le groupe de stations 14 pour une communication sont représentés. Par exemple dans la figure 1, seul un premier satellite 20-1 de la constellation 12 est représenté, dans la figure 2, le premier satellite et un second satellite 20-2 de la constellation 12 sont représentés, et dans la figure 3, seul le second satellite 20-2 est représenté.

Chaque satellite 20-1 à 20-N forme en particulier un relais de communications entre l'ensemble des stations 16-1, 16-2, 16-3 du groupe de stations 14, toutes notamment situées dans la zone géographique, et cela en particulier pendant une durée prédéfinie et à un horaire prédéfini. Cette durée et cet horaire sont prédéfinis par les éphémérides.

Chaque satellite 20-1 à 20-N comprend une charge utile 22 comprenant l'ensemble de ses composants électroniques permettant d'assurer ses fonctions de communication avec le groupe de stations 14 et optionnellement avec les autres satellites.

Les charges utiles 22 des satellites 20-1 à 20-N sont par exemple sensiblement analogues entre elles.

Par exemple, chaque charge utile 22 comprend, non représentés, un récepteur/émetteur de signaux radiofréquence configuré pour recevoir et transmettre des signaux radiofréquence comprenant les communications du groupe de stations 14. Chaque charge utile 22 comprend en outre par exemple au moins un circuit de contrôle et commande de l'émetteur/récepteur. L'émetteur/récepteur définit au moins un spot 24, dans lequel une communication entre les groupes de stations 14 par l'intermédiaire du satellite 20-1 à 20-N correspondant est mise en œuvre. En particulier, aucune communication entre le groupe de stations 14 positionnées à l'extérieur du spot 24 et le satellite correspondant 20-1 à 20-N n'est possible.

Le groupe de stations 14 comprend M stations 16-1 à 16-M. Le nombre M est supérieur à 2. Selon l'exemple des figures 1 à 3, le groupe de stations 14 comprend trois stations 16-1, 16-2, 16-3.

Chaque station 16-1 à 16-M du groupe 14 est configurée pour communiquer, par l'intermédiaire de l'un des satellites 20-1 à 20-N avec les autres stations 16-1 à 16-M du groupe 14.

Chaque station 16-1 à 16-M est une station au sol. Par « station au sol », il est entendu en particulier une station positionnée sur la surface de la terre ou dans l'atmosphère. Notamment, la station au sol est distincte d'une station embarquée dans un satellite.

Chaque station 16-1 à 16-M est par exemple une station fixe au sol, ou une station mobile.

Lorsque la station 16-1 à 16-M est une station mobile, elle est de préférence mobile à l'intérieur de la zone géographique. Par exemple, la station mobile est embarquée dans un véhicule terrestre, un véhicule maritime ou un aéronef.

Chaque station 16-1 à 16-M comprend au moins un module de contrôle 30, un émetteur/récepteur satellitaire 32 et au moins une antenne satellitaire 34, 36 reliée à l'émetteur/récepteur satellitaire 32 pour l'établissement de communications avec les autres stations 16-1 à 16-M du group 14 via l'intermédiaire du satellite 20-1 à 20-N.

Le module de contrôle 30 comprend une mémoire et un processeur, non représentés. Le module de contrôle 30 est en particulier configuré pour déterminer des messages de la communication mise en œuvre entre les stations 16-1 à 16-M via l'émetteur/récepteur satellitaire 32 et l'antenne satellitaire 34, 36.

L'émetteur/récepteur satellitaire 32 comprend par exemple un modem. L'émetteur/récepteur satellitaire 32 est en particulier configuré pour convertir des signaux numériques du module de contrôle 30 en signaux analogiques pour une transmission via l'antenne satellitaire 34, 36 au(x) satellite(s) 20-1 à 20-N. L'émetteur/récepteur satellitaire 32 est en outre configuré pour convertir des signaux analogiques reçus par l'antenne satellitaire 34, 36 en signaux numériques et les transmettre au module de contrôle 30.

Selon un exemple, l'émetteur/récepteur satellitaire 32 est configuré pour convertir simultanément des signaux numériques en signaux analogiques pour une émission de signaux simultanément à deux satellites parmi les satellites 20-1 à 20-N simultanément. Aussi, l'émetteur/récepteur satellitaire 32 est par exemple configuré pour convertir simultanément des signaux analogiques reçus des deux satellites en signaux numériques.

Les signaux analogiques sont en particulier des signaux radiofréquence. Par exemple, les signaux radiofréquence sont des signaux dans une ou plusieurs bandes attribuées aux communications satellitaires, telles que les bandes C, X, Ku, Ka, etc.

L'antenne satellitaire est de préférence soit une antenne satellitaire 34 de type appelé pointage multiple, soit une antenne satellitaire 36 de type appelé pointage simple dans la présente description.

L'antenne satellitaire 34 de type pointage multiple est configurée pour établir des connexions simultanément avec au moins deux satellites parmi les satellites 20-1 à 20-N, positionnés dans des directions distinctes par rapport à l'antenne satellitaire 34.

De préférence, l'antenne satellitaire 34 de type pointage multiple est une antenne électronique, en particulier dépourvue de pièces mécaniques mobiles pour une réorientation de l'antenne.

L'antenne satellitaire 36 de type pointage simple est configurée pour établir, à un instant donné, une connexion avec l'un parmi les satellites 20-1 à 20-N uniquement. En particulier, l'antenne satellitaire 36 de type pointage simple est configurée pour mettre en œuvre une connexion selon une seule direction, à un instant donné.

L'antenne satellitaire 36 de type pointage simple est en particulier inapte à mettre en œuvre une connexion simultanément avec deux ou plus satellites 20-1 à 20-N, positionnées dans des directions différentes par rapport à cette antenne.

L'antenne satellitaire 36 de type pointage simple est de préférence une antenne parabolique. Par exemple, l'antenne satellitaire 36 est configurée pour être orientée par rotation selon la direction du satellite donné 20-1 à 20-N pour établir la connexion.

Selon un autre exemple, l'antenne satellitaire 36 de type pointage simple est une antenne électronique, notamment dépourvue de pièces mécaniques mobiles pour une réorientation de l'antenne, mais apte à établir, à un instant donné, une connexion selon une seule direction avec l'un des satellites 20-1 à 20-N.

De préférence, au moins l'une des stations 16-1 à 16-M du groupe comprend l'antenne satellitaire 34 de type pointage multiple et au moins l'une des stations 16-1 à 16-M du groupe comprend l'antenne satellitaire 36 de type pointage simple.

Par exemple, en référence aux figures 1 à 3, la station 16-1 comprend l'antenne satellitaire 34 de type pointage multiple, et les stations 16-2 et 16-3 comprennent l'antenne satellitaire 36 de type pointage simple. Chaque antenne satellitaire 36 est configurée pour être orientée par rotation au satellite correspondant 20-1 à 20-N, comme illustré par les flèches 38.

Un procédé de changement 100 mis en œuvre par le système de communication 10, et en particulier par les stations 16-1 à 16-M du groupe de stations 14, est maintenant expliqué en référence à la figure 4 présentant un organigramme des étapes de ce procédé.

Il est considéré que lors de la mise en œuvre de ce procédé, les satellites 20-1 à 20-N sont en défilement le long de leur orbite habituelle.

Lors du défilement des satellites 20-1 à 20-N, chaque satellite est accessible pour une communication avec les stations 16-1 à 16-M positionnées dans le spot 24 à un horaire prédéfini et pendant une durée prédéfinie.

Le procédé de changement 100 comprend le changement des connexions de toutes les stations 16-1 à 16-M du groupe de stations 14 entre un premier état et un second état.

Dans le premier état, dont un exemple est illustré sur la figure 1, chaque station 16-1 à 16-M du groupe de stations 14 est connectée au même satellite, par exemple au premier satellite 20-1. De préférence, chaque station 16-1 à 16-M n'est pas connectée à des satellites autres que le premier satellite 20-1 lors de l'initialisation du procédé de changement 100. Dans le second état, dont un exemple est illustré sur la figure 3, chaque station 16-1 à 16-M du groupe de stations 14 est connectée à un satellite distinct du premier satellite 20-1, à savoir le second satellite 20-2. En d'autres termes, dans le premier état, toutes stations 16-1 à 16-M du groupe de stations 14 sont connectées au premier satellite 20-1, et dans le second état, toutes les stations 16-1 à 16-M sont connectées au second satellite 20-2.

Lors de l'initialisation du procédé de changement 100, le système de communication 10 est dans le premier état.

Le procédé de changement 100 comprend une phase d'élection 110 et une phase de basculement 120.

Lors de la phase d'élection 110, au moins une station parmi la pluralité de stations 16-1 à 16-M du groupe de stations 14 est élue pour commander un basculement entre le premier état et le second état. La ou les station(s), qui sont élue(s) lors de la phase d'élection 110, est/sont appelée(s) station(s) élue(s).

L'élection de la ou des station(s) élue(s) dépend au moins d'une caractéristique relative à l'antenne satellitaire 34, 36 de la station élue respective. Des exemples de la ou des caractéristiques sont décrits ci-après.

La phase d'élection 110 comprend par exemple une première étape de détermination 130, une étape de réception 135 et une seconde étape de détermination 140.

Lors de la première étape de détermination 130, chaque station 16-1 à 16-M détermine un marquage attribué à la station, parmi une pluralité de marquages prédéterminés, au moins en fonction de la caractéristique relative à l'antenne satellitaire 34, 36 de la station 16-1 à 16-M.

La caractéristique relative à l'antenne satellitaire 34, 36 de la station élue comprend par exemple une durée de commutation entre la connexion au premier satellite 20-1 et la connexion au second satellite 20-2. Par exemple, lorsque l'antenne satellitaire 36 est de type pointage simple et la réorientation de l'antenne est mise en œuvre par rotation de l'antenne, la durée de commutation correspond à la durée pour la réorientation de l'antenne satellitaire 36 entre les satellites 20-1 et 20-2.

Selon un autre exemple ou en complément optionnel, la caractéristique comprend une capacité d'établissement de connexions simultanément avec le premier satellite 20-1 et le second satellite 20-2. Par exemple, lorsque l'antenne satellitaire 34 est de type pointage multiple, cette antenne présente la capacité d'établissement de connexions simultanément avec le premier satellite 20-1 et le second satellite 20-2.

Lors de la première étape de détermination 130, la ou chaque station 16-1 à 16-M détermine le marquage et s'attribue ce marquage par exemple parmi un premier marquage, dit marquage préférentiel, un second marquage, dit marquage secondaire, et un troisième marquage, dit marquage inapte.

La ou chaque station 16-1 à 16-M détermine et s'attribue le marquage préférentiel, lorsque l'antenne satellitaire 34 de la station 16-1 à 16-M est configurée pour établir simultanément une connexion avec le premier satellite 20-1 et le second satellite 20-2. En particulier, dans ce cas, l'antenne satellitaire 34 est de type pointage multiple.

Lorsque la station 16-1 à 16-M s'attribue le marquage préférentiel, elle se considère comme station préférée pour commander le basculement entre le premier état et le second état.

La ou chaque station 16-1 à 16-M détermine et s'attribue le marquage secondaire, lorsque l'antenne satellitaire 36 de la station 16-1 à 16-M est de type pointage simple et la durée de commutation de la connexion entre le premier satellite 20-1 et le second satellite 20-2 est en outre inférieure ou égale à un seuil prédéterminé. En d'autres termes, l'antenne satellitaire 36 est configurée pour établir une connexion, à un instant donné, uniquement avec l'un parmi le premier satellite 20-1 et le second satellite 20-2, c'est-à-dire est de type pointage simple, et présente en plus la durée de commutation supérieure au seuil prédéterminé.

Le seuil prédéterminé est en particulier choisi de manière à garantir un basculement des connexions de toutes les stations 16-1 à 16-M du premier satellite 20-1 au second satellite 20-2 lors de la phase de basculement 120 avant la disparition du premier satellite 20-1 à l'horizon, comme cela est décrit dans le cadre de la description de la phase de basculement 120.

Lorsque la station 16-1 à 16-M s'attribue le marquage secondaire, elle se considère comme station qui est apte à commander le basculement entre le premier état et le second état, mais qui est moins adaptée que chaque station présentant le marquage préférentiel.

La ou chaque station 16-1 à 16-M détermine et s'attribue le marquage inapte, lorsque l'antenne satellitaire 36 de la station 16-1 à 16-M est de type pointage simple et lorsque l'antenne présente en outre une durée de commutation de la connexion entre le premier satellite et le second satellite strictement supérieure au seuil prédéterminé. Dans ce cas, la station 16-1 à 16-M se considère en particulier comme inapte pour commander le basculement.

Selon un exemple, chaque station 16-1 à 16-M détermine son marquage en outre en fonction d'une capacité de calcul de la station 16-1 à 16-M.

Par exemple, la capacité de calcul comprend, ou est définie par, la capacité d'estimer l'effet Doppler d'un signal transmis entre la station 16-1 à 16-M et le premier ou second satellite 20-1, 20-2.

En complément ou en variante, la capacité de calcul comprend, ou est définie par, la capacité de la station 16-1 à 16-M de déterminer un temps de transit d'un signal transmis via le premier ou via le second satellite 20-1, 20-2, par exemple d'un signal balise.

Par l'expression « temps de transit », il est notamment entendu la durée entre l'instant de l'émission, par la station 16-1 à 16-M, du signal vers le satellite correspondant, et l'instant de la réception, par la même station 16-1 à 16-M, d'une réponse de ce satellite comme suite à l'émission du signal.

Lorsque la station correspondante 16-1 à 16-M a la capacité de calcul d'estimer l'effet Doppler et/ou le temps de transit du signal, elle s'attribue par exemple le marquage préférentiel.

Une information comprenant l'estimation de l'effet Doppler et/ou le temps de transit permet en particulier d'établir très rapidement une connexion avec le second satellite 20-2 lors de la phase de basculement 120, puisque la station 16-1 à 16-M basculant la connexion du premier satellite 20-1 au second satellite 20-2 est capable de trouver le second satellite 20-2 rapidement, et ainsi établir la connexion.

Selon un exemple, chaque station 16-1 à 16-M détermine son marquage en outre en fonction du temps de transit du signal transmis via le premier ou via le second satellite 20-1, 20-2, par exemple par envoi et réception d'un signal balise via le satellite correspondant.

De préférence, la ou chaque station 16-1 à 16-M s'attribuant le marquage respectif, émet vers les autres stations 16-1 à 16-M un message comprenant un identifiant de la station 16-1 à 16-M et ce marquage.

Lors de l'étape de réception 135, au moins une des stations 16-1 à 16-M, de préférence chaque station 16-1 à 16-M du groupe 14, reçoit le message comprenant le marquage d'une autre station 16-1 à 16-M du groupe 14. La ou chaque station 16-1 à 16-M recevant le message est appelée « station considérée » dans la présente description.

Lors de la seconde étape de détermination 140, chaque station détermine, au moins en fonction son marquage, une éligibilité de former la station élue. De préférence, la station considérée 16-1 à 16-M détermine son éligibilité de former la station élue en outre en fonction du message reçu lors de l'étape de réception 135.

Par exemple, lors de la seconde étape de détermination 140, la station considérée 16-1 à 16-M détermine son éligibilité de former la station élue selon au moins un critère parmi un premier critère, un second critère et un troisième critère, de préférence selon l'ensemble de ces critères.

Selon le premier critère, la station considérée 16-1 à 16-M détermine qu'elle n'est pas éligible de former la station élue, si son marquage est le marquage secondaire et le message reçu de l'autre station lors de l'étape 135 comprend le marquage préférentiel de l'autre station.

Selon le second critère, la station considérée 16-1 à 16-M détermine qu'elle est éligible de former la station élue, si son marquage est le marquage secondaire et si, en plus, la durée de commutation fait partie des N stations 16-1 à 16-M présentant la durée de commutation la plus courte parmi les durées de commutation de toutes les stations 16-1 à 16-M du groupe de stations 14. N est un nombre entier prédéterminé, et est par exemple égal à 2 ou 3.

Selon le troisième critère, la station considérée détermine qu'elle est éligible de former la station élue, si le marquage de la station considérée est le marquage préférentiel. Dans ce cas, la station considérée détermine de préférence qu'elle est éligible indépendamment du message. Selon un exemple, dans ce cas, la station considérée détermine qu'elle est éligible seulement si un nombre d'autres stations du groupe de stations 14 considérées comme éligibles, est inférieur à un nombre prédéterminé. Cela permet en particulier de limiter le nombre de stations du groupe de stations 14 déterminant qu'elles sont éligibles de former la station élue.

La phase de basculement 120 comprend le basculement de toutes les connexions des stations 16-1 à 16-M du premier satellite 20-1, i.e. du premier état, au second satellite 20-2, i.e. au second état.

La phase de basculement 120 est de préférence mis en œuvre lorsque le système de communication 10 est dans un état intermédiaire de basculement, illustré sur la figure 2, dans lequel à la fois le premier et le second satellite 20-1 et 20-2 sont accessibles pour la communication.

La phase de basculement 120 comprend en particulier une étape de planification 145 d'une heure de basculement, une étape de vérification 150 de la présence du second satellite 20-2, une étape d'élaboration 155 d'une instruction de basculement, une étape de diffusion 160 de cette instruction et une étape d'application 165 de cette instruction.

Lors de l'étape de planification 145, la station élue 16-1 à 16-M détermine une heure de basculement entre la connexion au premier satellite 20-1 à la connexion au second satellite 20-2 pour chaque station 16-1 à 16-M. La station élue 16-1 à 16-M détermine l'heure de basculement au moins en fonction des éphémérides du premier et du second satellite 20-1, 20-2.

Lors de l'étape de vérification 150, la station élue 16-1 à 16-M vérifie la présence du second satellite 20-2. En particulier, la station élue 16-1 à 16-M émet un signal balise au second satellite 20-2, et reçoit une réponse au signal balise du second satellite 20-2 lors de la présence du second satellite 20-2.

Pour ce faire, si l'antenne satellitaire 34 de la station élue 16-1 à 16-M est de type pointage multiple, la station élue 16-1 à 16-M émet le signal balise au second satellite 20-2 et continue d'être connectée au premier satellite 20-1 simultanément.

Si l'antenne satellitaire 36 de la station élue 16-1 à 16-M est de type pointage simple, la station élue 16-1 à 16-M interrompt la connexion avec le premier satellite 20-1, réoriente l'antenne satellitaire 36 au second satellite 20-2, par exemple par rotation de l'antenne satellitaire 36, et émet le signal balise vers le second satellite 20-2. Lors de la réception de la réponse au signal balise, la station élue 16-1 à 16-M effectue de nouveau une rotation de l'antenne satellitaire 36 vers le premier satellite 20-1, notamment avant la mise en œuvre de l'étape d'élaboration 155 et l'étape de diffusion 160.

Lors de l'étape d'élaboration 155, la station élue 16-1 à 16-M élabore l'instruction de basculement.

L'instruction de basculement comprend une commande de basculer la connexion vers le second satellite 20-2. L'instruction de basculement comprend en outre par exemple un identifiant et des positions en fonction du temps du second satellite 20-2. De préférence, l'instruction de basculement comprend en outre l'heure de basculement.

Lorsque la station élue 16-1 à 16-M présente la capacité d'estimer l'effet Doppler d'un signal transmis via le second satellite 20-2, l'instruction de basculement comprend de préférence une indication de l'effet Doppler estimé pour la transmission.

Lorsque la station élue 16-1 à 16-M présente la capacité d'estimer le temps de transit d'un signal transmis via le second satellite 20-2, l'instruction de basculement comprend de préférence ce temps de transit estimé.

Cela permet en particulier à chaque station 16-1 à 16-M appliquant l'instruction de basculement lors de l'étape d'application 165, d'établir la connexion avec le second satellite 20-2 très rapidement, puisque cette station connaît certains paramètres pour l'établissement de la connexion, à savoir l'effet Doppler et/ou le temps de transit estimé.

Lors de l'étape de diffusion 160, la station élue diffuse l'instruction de basculement via le premier satellite 20-1 aux autres stations du groupe. Par exemple, la station élue diffuse l'instruction de basculement plusieurs fois, en particulier périodiquement.

De préférence, l'étape de diffusion 160 est uniquement mise en œuvre comme suite à la réception, lors de l'étape de vérification 150, par la station élue 16-1 à 16-M de la réponse au signal balise.

Par exemple, la station élue diffuse l'instruction de basculement pendant une durée de diffusion prédéterminée. De préférence, la station élue débute la diffusion à un instant donné avant l'heure de basculement. Un laps de temps entre cet instant donné et l'heure de basculement dépend par exemple de la durée de commutation de la station élue. De préférence, le laps de temps est supérieur à la somme de la durée de commutation et de la durée de diffusion prédéterminée.

Cela permet en particulier à la station élue, notamment lorsqu'elle comprend l'antenne satellitaire 36 de type pointage simple, d'établir la connexion avec le second satellite 20-2 avant la connexion des autres stations 16-1 à 16-M au second satellite 20-2, et ainsi de surveiller le basculement de toutes les stations 16-1 à 16-M au second satellite 20-2 lors de l'étape d'application 165.

Lors de l'étape d'application 165, chaque station 16-1 à 16-M du groupe 14 reçoit l'instruction de basculement, et applique l'instruction, en basculant la connexion du premier satellite 20-1 au second satellite 20-2.

Les étapes de planification 145, de vérification 150, d'élaboration 155 et de diffusion 160 sont mises en œuvre par la station élue 16-1 à 16-M, qui est élue lors de la phase d'élection 110. Lorsque plusieurs stations 16-1 à 16-M sont élues, lors de la phase d'élection 110, pour former les stations élues, chacune de ces stations met de préférence en œuvre les étapes 145, 150, 155 et 160.

Par exemple, lorsque plusieurs stations 16-1 à 16-M sont les stations élues, chaque station élue diffuse par exemple l'instruction de basculement lors de l'étape de diffusion 160, et chaque station 16-1 à 16-M, notamment les stations autres que les stations élues, applique, lors de l'étape d'application 165, l'instruction de basculement reçue en premier.

De préférence, la phase d'élection 110 est répétée plusieurs fois avant la mise en œuvre de la phase de basculement 120.

Bien entendu, d'autres modes de réalisation peuvent être envisagés. Par exemple, les étapes 130 à 155 et 165 sont des étapes optionnelles, et/ou des variantes de ces étapes sont envisageables, sans toutefois sortir de la protée de l'invention telle que définie par les revendications.

## Revendications

1. Procédé de changement (100) de connexions entre des stations (16-1, 16-2, 16-3) d'un groupe de stations (14), entre un premier état, dans lequel chaque station (16-1, 16-2, 16-3) du groupe de stations (14) est connectée à un premier satellite (20-1) d'une pluralité de satellites (20-1, 20-2), et un second état, dans lequel chaque station (16-1, 16-2, 16-3) du groupe de stations (14) est connectée à un second satellite (20-2) de la pluralité de satellites (20-1, 20-2), distinct du premier satellite (20-1), lors de l'initialisation du procédé de changement (100), les stations (16-1, 16-2, 16-3) étant dans le premier état, chaque satellite (20-1, 20-2) étant mobile par rapport à une zone géographique dans laquelle les stations (16-1, 16-2, 16-3) dudit groupe de stations (14) sont positionnées, chaque station (16-1, 16-2, 16-3) étant apte à établir une connexion avec chaque satellite (20-1, 20-2) pendant une durée de présence prédéterminée dudit satellite (20-1, 20-2), considérée pour ladite zone géographique,
**caractérisé en ce que** le procédé de changement (100) comprend :
- une phase d'élection (110) d'au moins une station parmi les stations (16-1, 16-2, 16-3) du groupe de stations (14), en fonction au moins d'une caractéristique relative à une antenne satellitaire (34, 36) de ladite station (16-1, 16-2, 16-3), pour obtenir au moins une station élue, la ou chaque station élue étant une station qui commande un basculement entre le premier état et le second état ;
- une phase de basculement (120), comprenant une étape de diffusion (160), par la ou chaque station élue aux autres stations (16-1, 16-2, 16-3) du groupe de stations (14), d'une instruction de basculement de la connexion du premier satellite (20-1) au second satellite (20-2).

2. Procédé de changement (100) selon la revendication 1, dans lequel la caractéristique relative à l'antenne satellitaire (34, 36) de la station (16-1, 16-2, 16-3) comprend une durée de commutation entre la connexion au premier satellite (20-1) et la connexion au second satellite (20-2) de ladite station (16-1, 16-2, 16-3) et/ou comprend une capacité d'établissement de connexions simultanément avec le premier satellite (20-1) et le second satellite (20-2) par ladite station (16-1, 16-2, 16-3).

3. Procédé de changement (100) selon la revendication 1 ou 2, dans lequel la phase d'élection (110) comprend l'élection de la ou chaque station élue en outre en fonction d'une capacité de calcul de ladite station (16-1, 16-2, 16-3).

4. Procédé de changement (100) selon la revendication 3, dans lequel la capacité de calcul comprend une capacité d'estimer un temps de transit d'un signal transmis via le second satellite (20-2) et/ou une capacité d'estimer l'effet Doppler du signal transmis via le second satellite (20-2).

5. Procédé de changement (100) selon l'une quelconque des revendications précédentes, dans lequel la phase d'élection (110) comprend :
- une première étape de détermination (130), par chaque station (16-1, 16-2, 16-3), d'un marquage attribué à cette station, parmi une pluralité de marquages prédéterminés, en fonction de la caractéristique relative à l'antenne satellitaire (34, 36) de ladite station (16-1, 16-2, 16-3) ;
- une seconde étape de détermination (140), lors de laquelle chaque station (16-1, 16-2, 16-3) détermine, au moins en fonction du marquage à cette station, une éligibilité de former une station élue de la ou des station(s) élue(s).

6. Procédé de changement (100) selon la revendication 5, dans lequel chaque station (16-1, 16-2, 16-3) détermine le marquage attribué à cette station parmi :
- un premier marquage, dit marquage préférentiel, lorsque l'antenne satellitaire (34) de ladite station (16-1, 16-2, 16-3) est configurée pour établir simultanément une connexion avec le premier satellite (20-1) et le second satellite (20-2) ;
- un second marquage, dit marquage secondaire, lorsque l'antenne satellitaire (36) de ladite station est configurée pour établir une connexion, à un instant donné, uniquement avec l'un parmi le premier satellite (20-1) et le second satellite (20-2), et lorsque l'antenne satellitaire (36) présente en outre une durée de commutation de la connexion entre le premier satellite (20-1) et le second satellite (20-2) inférieure ou égale à un seuil prédéterminé ;
- un troisième marquage, dit marquage inapte, lorsque l'antenne satellitaire (36) de ladite station est configurée pour établir une connexion, à un instant donné, uniquement avec l'un parmi le premier satellite (20-1) et le second satellite (20-2), et lorsque l'antenne satellitaire (36) présente en outre une durée de commutation de la connexion entre le premier satellite (20-1) et le second satellite (20-2) strictement supérieure au seuil prédéterminé.

7. Procédé de changement (100) selon la revendication 5 ou 6, dans lequel la phase d'élection (110) comprend en outre une étape de réception (135), par l'une des stations (16-1, 16-2, 16-3) du groupe de stations (14), dite station considérée, d'un message comprenant le marquage de l'une des stations (16-1, 16-2, 16-3) du groupe de stations (14) autre que la station considérée, dite autre station, et dans lequel, lors de la seconde étape de détermination (140), la station considérée détermine son éligibilité de former une station élue de la ou des station(s) élue(s) en outre en fonction dudit message.

8. Procédé de changement (100) selon la revendication 7, dans lequel, lors de la seconde étape de détermination (140), la station considérée détermine son éligibilité selon au moins un des critères suivants :
- si le marquage de la station considérée est le marquage secondaire et le message comprend le marquage préférentiel de l'autre station, la station considérée détermine qu'elle n'est pas éligible de former une station élue de la ou des station(s) élue(s) ;
- si le marquage de la station considérée est le marquage secondaire et le message comprend le marquage secondaire de l'autre station, la station considérée détermine qu'elle est éligible de former une station élue de la ou des station(s) élue(s) uniquement si la durée de commutation fait partie des N stations (16-1, 16-2, 16-3) présentant la durée de commutation la plus courte parmi les durées de commutation de toutes les stations (16-1, 16-2, 16-3) du groupe de stations (14), N étant un nombre entier prédéterminé,
- si le marquage de la station considérée est le marquage préférentiel, la station considérée détermine qu'elle est éligible de former une station élue de la ou des station(s) élue(s).

9. Procédé de changement (100) selon la revendication 8, **caractérisé en ce que** si le marquage de la station considérée est le marquage préférentiel, la station considérée détermine qu'elle est éligible de former une station élue de la ou des station(s) élue(s) indépendamment du message.

10. Procédé de changement (100) selon l'une quelconque des revendications précédentes, dans lequel la phase de basculement (120) comprend une étape de planification (145) d'une heure de basculement entre la connexion au premier satellite (20-1) à la connexion au second satellite (20-2) pour chaque station, en fonction des éphémérides au moins du premier et le second satellite (20-1, 20-2), et
dans lequel l'instruction de basculement comprend l'heure de basculement.

11. Procédé de changement (100) selon l'une quelconque des revendications précédentes, dans lequel la phase de basculement (120) comprend une étape de vérification (150) d'une présence du second satellite (20-2), lors de laquelle la ou chaque station élue émet un signal balise vers le second satellite (20-2), et reçoit une réponse au signal balise du second satellite (20-2) lors de la présence dudit second satellite (20-2),

12. Procédé de changement (100) selon la revendication 11, dans lequel l'étape de diffusion (160) est uniquement mise en œuvre lors d'une réception de ladite réponse.

13. Procédé de changement (100) selon l'une quelconque des revendications précédentes, dans lequel, lors de l'étape de diffusion (160), la ou chaque station élue diffuse l'instruction de basculement via le premier satellite (20-1) aux autres stations (16-1, 16-2, 16-3) du groupe de stations (14).

14. Groupe de stations (14) comprenant plusieurs stations (16-1, 16-2, 16-3) configuré pour changer des connexions entre les stations (16-1, 16-2, 16-3), entre un premier état, dans lequel chaque station (16-1, 16-2, 16-3) du groupe de stations (14) est connectée à un premier satellite (20-1) d'une pluralité de satellites (20-1, 20-2), et un second état, dans lequel chaque station (16-1, 16-2, 16-3) du groupe de stations (14) est connectée à un second satellite (20-2) de la pluralité de satellites (20-1, 20-2), distinct du premier satellite (20-1), chaque satellite (20-1, 20-2) étant mobile par rapport à une zone géographique dans laquelle les stations (16-1, 16-2, 16-3) dudit groupe de stations (14) sont positionnées, chaque station (16-1, 16-2, 16-3) étant apte à établir une connexion avec chaque satellite (20-1, 20-2) pendant une durée de présence prédéterminée dudit satellite (20-1, 20-2), considérée pour ladite zone géographique,
**caractérisé en ce que** le groupe de stations (14) est configuré pour élire au moins une station parmi les stations (16-1, 16-2, 16-3) du groupe de stations (14), en fonction au moins d'une caractéristique relative à une antenne satellitaire (34, 36) de ladite station (16-1, 16-2, 16-3), pour obtenir au moins une station élue, la ou chaque station élue étant configurée pour commander un basculement entre le premier état et le second état,
et **en ce que** la ou chaque station élue est configurée pour diffuser, aux autres stations (16-1, 16-2, 16-3) du groupe de stations (14), une instruction de basculement de la connexion du premier satellite (20-1) au second satellite (20-2).

## Patentansprüche

1. Wechselverfahren (100) von Verbindungen zwischen Stationen (16-1, 16-2, 16-3) einer Gruppe von Stationen (14) zwischen einem ersten Zustand, in dem jede Station (16-1, 16-2, 16-3) der Gruppe von Stationen (14) mit einem ersten Satelliten (20-1) einer Vielzahl von Satelliten (20-1, 20-2) verbunden ist, und einem zweiten Zustand, in dem jede Station (16-1, 16-2, 16-3) der Gruppe von Stationen (14) mit einem zweiten (20-2) der Vielzahl von Satelliten (20-1, 20-2) verbunden ist, der von dem ersten Satelliten (20-1) verschieden ist, bei der Initialisierung des Wechselverfahrens (100), wobei die Stationen (16-1, 16-2, 16-3) in dem ersten Zustand sind, jeder Satellit (20-1, 20-2) in Bezug auf ein geographisches Gebiet, in dem die Stationen (16-1, 16-2, 16-3) der Gruppe von Stationen (14) positioniert sind, beweglich ist, wobei jede Station (16-1, 16-2, 16-3) geeignet ist, um während einer vorbestimmten Anwesenheitsdauer des Satelliten (20-1, 20-2), die für das geographische Gebiet betrachtet wird, eine Verbindung mit jedem Satelliten (20-1, 20-2) herzustellen,
**dadurch gekennzeichnet, dass** das Wechselverfahren (100) Folgendes umfasst:
- eine Wählphase (110) mindestens einer Station unter den Stationen (16-1, 16-2, 16-3) der Gruppe von Stationen (14) abhängig von mindestens einem Merkmal, das sich auf eine Satellitenantenne (34, 36) der Station (16-1, 16-2, 16-3) bezieht, um mindestens eine gewählte Station zu erlangen, wobei die oder jede gewählte Station eine Station ist, die ein Kippen zwischen dem ersten Zustand und dem zweiten Zustand steuert;
- eine Umschaltphase (120), umfassend einen Aussendungsschritt (160), durch die oder jede gewählte Station an die anderen Stationen (16-1, 16-2, 16-3) der Gruppe von Stationen (14), einer Anweisung zum Umschalten der Verbindung von dem ersten Satelliten (20-1) zu dem zweiten Satelliten (20-2).

2. Wechselverfahren (100) nach Anspruch 1, wobei das Merkmal in Bezug auf die Satellitenantenne (34, 36) der Station (16-1, 16-2, 16-3) eine Umschaltzeit zwischen der Verbindung mit dem ersten Satelliten (20-1) und der Verbindung mit dem zweiten Satelliten (20-2) der Station (16-1, 16-2, 16-3) umfasst und/oder eine Fähigkeit zum gleichzeitigen Herstellen von Verbindungen mit dem ersten Satelliten (20-1) und dem zweiten Satelliten (20-2) durch die Station (16-1, 16-2, 16-3) umfasst.

3. Wechselverfahren (100) nach Anspruch 1 oder 2, wobei die Wählphase (110) die Wahl der oder jeder Station umfasst, die zusätzlich basierend auf einer Rechenkapazität der Station (16-1, 16-2, 16-3) gewählt wird.

4. Wechselverfahren (100) nach Anspruch 3, wobei die Rechenkapazität eine Fähigkeit zum Schätzen einer Laufzeit eines über den zweiten Satelliten (20-2) übertragenen Signals und/oder eine Fähigkeit zum Schätzen des Dopplereffekts des über den zweiten Satelliten (20-2) übertragenen Signals umfasst.

5. Wechselverfahren (100) nach einem der vorherigen Ansprüche, wobei die Wählphase (110) Folgendes umfasst:
- einen ersten Bestimmungsschritt (130), durch jede Station (16-1, 16-2, 16-3), einer dieser Station zugewiesenen Markierung aus einer Vielzahl von vorbestimmten Markierungen abhängig von dem Merkmal bezüglich der Satellitenantenne (34, 36) der Station (16-1, 16-2, 16-3);
- einen zweiten Bestimmungsschritt (140), bei dem jede Station (16-1, 16-2, 16-3) zumindest basierend auf der Markierung an dieser Station eine Berechtigung zum Bilden einer gewählten Station der gewählten Station(en) bestimmt.

6. Wechselverfahren (100) nach Anspruch 5, wobei jede Station (16-1, 16-2, 16-3) die dieser Station zugewiesene Markierung bestimmt, aus:
- einer ersten Markierung, die als bevorzugte Markierung bezeichnet wird, wenn die Satellitenantenne (34) der Station (16-1, 16-2, 16-3) konfiguriert ist, um gleichzeitig eine Verbindung mit dem ersten Satelliten (20-1) und dem zweiten Satelliten (20-2) herzustellen;
- eine zweite Markierung, die als sekundäre Markierung bezeichnet wird, wenn die Satellitenantenne (36) der Station konfiguriert ist, um zu einem gegebenen Zeitpunkt eine Verbindung nur mit dem ersten Satelliten (20-1) oder dem zweiten Satelliten (20-2) herzustellen, und wenn die Satellitenantenne (36) ferner eine Umschaltdauer der Verbindung zwischen dem ersten Satelliten (20-1) und dem zweiten Satelliten (20-2) aufweist, die kleiner als oder gleich wie ein vorbestimmter Schwellenwert ist;
- eine dritte Markierung, die als ungeeignete Markierung bezeichnet wird, wenn die Satellitenantenne (36) der Station konfiguriert ist, um zu einem gegebenen Zeitpunkt eine Verbindung nur mit dem ersten Satelliten (20-1) oder dem zweiten Satelliten (20-2) herzustellen, und wenn die Satellitenantenne (36) ferner eine Umschaltdauer der Verbindung zwischen dem ersten Satelliten (20-1) und dem zweiten Satelliten (20-2) aufweist, die strikt über dem vorbestimmten Schwellenwert ist;

7. Wechselverfahren (100) nach Anspruch 5 oder 6, wobei die Wählphase (110) ferner einen Empfangsschritt (135), durch eine der Stationen (16-1, 16-2, 16-3) der Gruppe von Stationen (14), die als betrachtete Station bezeichnet wird, einer Nachricht umfasst, umfassend die Markierung einer der Stationen (16-1, 16-2, 16-3) der Gruppe von Stationen (14), die nicht die betrachtete Station ist, die als andere Station bezeichnet wird, und wobei in dem zweiten Bestimmungsschritt (140) die betrachtete Station ihre Eignung zum Bilden einer gewählten Station der zusätzlich gewählten Station(en) basierend auf der Nachricht bestimmt.

8. Wechselverfahren (100) nach Anspruch 7, wobei die betrachtete Station in dem zweiten Bestimmungsschritt (140) ihre Berechtigung nach mindestens einem der folgenden Kriterien bestimmt:
- wenn die Markierung der betrachteten Station die sekundäre Markierung ist und die Nachricht die bevorzugte Markierung der anderen Station umfasst, bestimmt die betrachtete Station, dass sie nicht berechtigt ist, eine auserwählte Station der auserwählten Station(en) zu bilden;
- wenn die Markierung der betrachteten Station die sekundäre Markierung ist und die Nachricht die sekundäre Markierung der anderen Station umfasst, die betrachtete Station bestimmt, dass sie nur dann berechtigt ist, eine gewählte Station der gewählten Station(en) zu bilden, wenn die Umschaltzeit zu den N Stationen (16-1, 16-2, 16-3) mit der kürzesten Umschaltzeit unter den Umschaltzeiten aller Stationen (16-1, 16-2, 16-3) der Gruppe von Stationen (14) gehört, wobei N eine vorbestimmte ganze Zahl ist,
- wenn die Markierung der betrachteten Station die bevorzugte Markierung ist, bestimmt die betrachtete Station, dass sie berechtigt ist, eine auserwählte Station der auserwählten Station(en) zu bilden.

9. Wechselverfahren (100) nach Anspruch 8, **dadurch gekennzeichnet, dass**, wenn die Markierung der betrachteten Station die bevorzugte Markierung ist, die betrachtete Station bestimmt, dass sie berechtigt ist, unabhängig von der Nachricht eine gewählte Station der gewählten Station(en) zu bilden.

10. Wechselverfahren (100) nach einem der vorherigen Ansprüche, wobei die Umschaltphase (120) einen Planungsschritt (145) einer Umschaltzeit zwischen der Verbindung zu dem ersten Satelliten (20-1) zur Verbindung mit dem zweiten Satelliten (20-2) für jede Station umfasst, abhängig von den Ephemeriden zumindest des ersten und des zweiten Satelliten (20-1, 20-2), und
wobei die Umschaltanweisung die Umschaltzeit umfasst.

11. Wechselverfahren (100) nach einem der vorherigen Ansprüche, wobei die Umschaltphase (120) einen Überprüfungsschritt (150) einer Anwesenheit des zweiten Satelliten (20-2) umfasst, bei dem die oder jede gewählte Station ein Bakensignal zu dem zweiten Satelliten (20-2) sendet und bei Anwesenheit des zweiten Satelliten (20-2) eine Antwort auf das Bakensignal des zweiten Satelliten (20-2) empfängt,

12. Wechselverfahren (100) nach Anspruch 11, wobei der Aussendungsschritt (160) nur bei einem Empfang der Antwort durchgeführt wird.

13. Wechselverfahren (100) nach einem der vorherigen Ansprüche, wobei während des Aussendungsschritts (160) die oder jede gewählte Station die Umschaltanweisung über den ersten Satelliten (20-1) an die anderen Stationen (16-1, 16-2, 16-3) der Gruppe von Stationen (14) aussendet.

14. Gruppe von Stationen (14), umfassend mehrere Stationen (16-1, 16-2, 16-3), die konfiguriert sind, um Verbindungen zwischen den Stationen (16-1, 16-2, 16-3) zwischen einem ersten Zustand, in dem jede Station (16-1, 16-2, 16-3) der Gruppe von Stationen (14) mit einem ersten Satelliten (20-1) aus einer Vielzahl von Satelliten (20-1, 20-2) verbunden ist, und einem zweiten Zustand, in dem jede Station (16-1, 16-2, 16-3) der Gruppe von Stationen (14) mit einem zweiten (20-2) der Vielzahl von Satelliten (20-1, 20-2) verbunden ist, der von dem ersten Satelliten (20-1) verschieden ist, zu wechseln, wobei jeder Satellit (20-1, 20-2) in Bezug auf ein geographisches Gebiet, in dem die Stationen (16-1, 16-2, 16-3) der Gruppe von Stationen (14) positioniert sind, beweglich ist, wobei jede Station (16-1, 16-2, 16-3) geeignet ist, um während einer vorbestimmten Anwesenheitsdauer des Satelliten (20-1, 20-2), die für das geographische Gebiet betrachtet wird, eine Verbindung mit jedem Satelliten (20-1, 20-2) herzustellen,
**dadurch gekennzeichnet, dass** die Gruppe von Stationen (14) konfiguriert ist, um mindestens eine Station aus den Stationen (16-1, 16-2, 16-3) der Gruppe von Stationen (14) zu wählen, abhängig von mindestens einem Merkmal in Bezug auf eine Satellitenantenne (34, 36) der Station (16-1, 16-2, 16-3), um mindestens eine gewählte Station zu erlangen, wobei die oder jede gewählte Station konfiguriert ist, um ein Umschalten zwischen dem ersten Zustand und dem zweiten Zustand zu steuern,
und dass die oder jede gewählte Station konfiguriert ist, um an die anderen Stationen (16-1, 16-2, 16-3) der Gruppe von Stationen (14) eine Anweisung zum Umschalten der Verbindung von dem ersten Satelliten (20-1) zu dem zweiten Satelliten (20-2) auszusenden.

## Claims

1. A method for changing (100) connections between stations (16-1, 16-2, 16-3) of a group of stations (14) between a first state, wherein each station (16-1, 16-2, 16-3) of the group of stations (14) is connected to a first satellite (20-1) of a plurality of satellites (20-1, 20-2), and a second state, wherein each station (16-1, 16-2, 16-3) of the group of stations (14) is connected to a second satellite (20-2) of the plurality of satellites (20-1, 20-2), distinct from the first satellite (20-1), upon initialisation of the change method (100), the stations (16-1, 16-2, 16-3) being in the first state, each satellite (20-1, 20-2) being mobile relative to a geographical area wherein the stations (16-1, 16-2, 16-3) of said group of stations (14) are positioned, each station (16-1, 16-2, 16-3) being capable of establishing a connection with each satellite (20-1, 20-2) for a predetermined duration of presence of said satellite (20-1, 20-2), considered for said geographical area,
**characterised in that** the change method (100) comprises:
- an phase (110) of electing at least one station among the stations (16-1, 16-2, 16-3) of the group of stations (14), as a function of at least one characteristic relating to a satellite antenna (34, 36) of said station (16-1, 16-2, 16-3), in order to obtain at least one elected station, the or each elected station being a station which controls a changeover between the first state and the second state;
- a changeover phase (120), comprising a step of broadcasting (160), by the or each elected station to the other stations (16-1, 16-2, 16-3) of the group of stations (14), an instruction to switch the connection from the first satellite (20-1) to the second satellite (20-2).

2. The change method (100) according to claim 1, wherein the characteristic relating to the satellite antenna (34, 36) of the station (16-1, 16-2, 16-3) comprises a switching duration for switching between the connection to the first satellite (20-1) and the connection to the second satellite (20-2) of said station (16-1, 16-2, 16-3) and/or comprises a capability of establishing connections simultaneously with the first satellite (20-1) and the second satellite (20-2) by said station (16-1, 16-2, 16-3).

3. The change method (100) according to claim 1 or 2, wherein the election phase (110) comprises electing the or each station elected additionally according to a computing capability of said station (16-1, 16-2, 16-3).

4. The change method (100) according to claim 3, wherein the computing capability comprises a capability to estimate a transit time of a signal transmitted via the second satellite (20-2) and/or a capability to estimate the Doppler effect of the signal transmitted via the second satellite (20-2).

5. The change method (100) according to any one of the preceding claims, wherein the election phase (110) comprises:
- a first step (130) of determining, by each station (16-1, 16-2, 16-3), a marking assigned to this station, from among a plurality of predetermined markings, as a function of the characteristic relating to the satellite antenna (34, 36) of said station (16-1, 16-2, 16-3);
- a second step (140) of determining, wherein each station (16-1, 16-2, 16-3) determines, at least as a function of the marking at that station, an eligibility to form an elected station of the elected station(s).

6. The change method (100) according to claim 5, wherein each station (16-1, 16-2, 16-3) determines the marking assigned to that station from:
- a first marking, known as preferred marking, when the satellite antenna (34) of said station (16-1, 16-2, 16-3) is configured to simultaneously establish a connection with the first satellite (20-1) and the second satellite (20-2);
- a second marking, referred to as secondary marking, when the satellite antenna (36) of said station is configured to establish a connection, at a given time, only with one of the first satellite (20-1) and the second satellite (20-2), and when the satellite antenna (36) also has a switching duration for the connection between the first satellite (20-1) and the second satellite (20-2) that is less than or equal to a predetermined threshold;
- a third marking, referred to as unfit marking, when the satellite antenna (36) of said station is configured to establish a connection, at a given time, only with one of the first satellite (20-1) and the second satellite (20-2), and when the satellite antenna (36) also has a switching duration for the connection between the first satellite (20-1) and the second satellite (20-2) that is strictly greater than or equal to a predetermined threshold.

7. The change method (100) according to claim 5 or 6, wherein the election phase (110) further comprises a step of receiving (135), by one of the stations (16-1, 16-2, 16-3) of the group of stations (14), referred to as the station in question, a message comprising the marking of one of the stations (16-1, 16-2, 16-3) of the group of stations (14) other than the station in question, referred to as the other station, and wherein, during the second step of determining (140), the station in question determines its eligibility to form an elected station of the elected station(s) additionally as a function of said message.

8. The change method (100) according to claim 7, wherein, during the second step of determining (140), the station in question determines its eligibility according to at least one of the following criteria:
- if the marking of the station in question is the secondary marking and the message includes the preferred marking of the other station, the station in question determines that it is not eligible to form an elected station of the elected station(s);
- if the marking of the station in question is the secondary marking and the message comprises the secondary marking of the other station, the station in question determines that it is eligible to form an elected station of the elected station(s) only if the switching duration is one of the N stations (16-1, 16-2, 16-3) that has the shortest switching duration among the switching times of all the stations (16-1, 16-2, 16-3) of the group of stations (14), N being a predetermined integer,
- if the marking of the station in question is the preferred marking, the station in question determines that it is eligible to form an elected station of the elected station(s).

9. The change method (100) according to claim 8, **characterised in that** if the marking of the station in question is the preferred marking, the station in question determines that it is eligible to form an elected station of the elected station(s) independently of the message.

10. The change method (100) according to any one of the preceding claims, wherein the changeover phase (120) comprises a step for scheduling (145) a changeover time for when to change between the connection to the first satellite (20-1) and the connection to the second satellite (20-2) for each station, as a function of the ephemerides of at least the first and second satellites (20-1, 20-2), and
wherein the changeover instruction comprises the changeover time.

11. The change method (100) according to any one of the preceding claims, wherein the changeover phase (120) comprises a step of verifying (150) a presence of the second satellite (20-2), during which the or each elected station transmits a beacon signal to the second satellite (20-2), and receives a response to the beacon signal from the second satellite (20-2) when the said second satellite (20-2) is present.

12. The change method (100) according to claim 11, wherein the broadcasting step (160) is only implemented upon receipt of said response.

13. The change method (100) according to any one of the preceding claims, wherein, during the broadcasting step (160), the or each elected station broadcasts the changeover instruction via the first satellite (20-1) to the other stations (16-1, 16-2, 16-3) in the group of stations (14).

14. A group of stations (14) comprising a plurality of stations (16-1, 16-2, 16-3) configured to change connections between stations (16-1, 16-2, 16-3), between a first state, wherein each station (16-1, 16-2, 16-3) of the group of stations (14) is connected to a first satellite (20-1) of a plurality of satellites (20-1, 20-2), and a second state, wherein each station (16-1, 16-2, 16-3) of the group of stations (14) is connected to a second satellite (20-2) of the plurality of satellites (20-1, 20-2), distinct from the first satellite (20-1), each satellite (20-1, 20-2) being mobile relative to a geographical area wherein the stations (16-1, 16-2, 16-3) of said group of stations (14) are positioned, each station (16-1, 16-2, 16-3) being capable of establishing a connection with each satellite (20-1, 20-2) for a predetermined duration of presence of said satellite (20-1, 20-2), considered for said geographical area,
**characterised in that** the group of stations (14) is configured to elect at least one station from among the stations (16-1, 16-2, 16-3) of the group of stations (14), as a function of at least one characteristic relating to a satellite antenna (34, 36) of said station (16-1, 16-2, 16-3), to obtain at least one elected station, the or each elected station being configured to control a changeover between the first state and the second state,
and **in that** the or each elected station is configured to broadcast, to the other stations (16-1, 16-2, 16-3) of the group of stations (14), an instruction to switch the connection from the first satellite (20-1) to the second satellite (20-2).
